# EUROPEAN PATENT APPLICATION

(11) **EP 4 621 709 A1**
(43) Date of publication of application: **24.09.2025**
(21) Application number: 22967493.2
(22) Date of filing: 05.12.2022
(51) Int. Cl.: G06T 7/00

(54) **GENE IMAGE DATA CORRECTION METHOD AND SYSTEM, AND ELECTRONIC DEVICE AND STORAGE MEDIUM**

(71) Applicant: BGI Shenzhen, Shenzhen, Guangdong 518083 (CN); BGI Shenzhen Co., Ltd, Shenzhen, Guangdong 518083 (CN)
(72) Inventor: LI, Min, Shenzhen, Guangdong 518083 (CN); LI, Mei, Shenzhen, Guangdong 518083 (CN); LI, Yuxiang, Shenzhen, Guangdong 518083 (CN)
(74) Representative: Ashton, Gareth Mark
(86) International application number: PCT/CN2022/136672
(87) International publication number: WO 2024/119330

(57) **Abstract**

Provided in the present application are a gene image data correction method and system, and an electronic device and a storage medium. The gene image data correction method comprises: inputting spatial coordinates and a gene expression feature signal value into a probability distribution model, so as to obtain a probability score of a background gene molecule belonging to a target cell; and according to the probability score, determining a cell to which the background gene molecule belongs. **In** the present application, with a rough understanding of a target region of a target cell, a probability score of a background gene molecule, with a cell to which the background gene molecule belongs being unknown, within a preset correction range belonging to a target cell is calculated, and the cell to which the background gene molecule belongs is determined according to the probability score, thereby reducing situations where errors in gene image data are large due to the diffusion of gene molecules, and increasing the correction efficiency; moreover, the present application does not rely on high-precision cell segmentation results, thereby enhancing the robustness of the correction scheme.

## Description

### TECHNICAL FIELD

The present disclosure relates to the technical field of gene image processing, and in particular to a gene image data correction method and system, an electronic device, and a storage medium.

### BACKGROUND

RNA cell labeling (a technique for labeling genetic information within living cells) involves assigning genes to cells based on registered cell contour images and gene expression data corresponding to the cells. However, due to challenges such as insufficient intracellular gene counts, nuclear segmentation issues, and RNA (ribonucleic acid, the genetic information carrier in biological cells and certain viruses/viroids) diffusion artifacts, the number of genes assigned to a cell is significantly lower than the actual genes contained within the cell. This necessitates correction of RNA cell labeling results to improve accuracy of RNA cell labeling. RNA cell labeling is a critical step in the downstream analysis of Stereo-seq (Spatio-Temporal Enhanced Resolution Omics-sequencing) spatial transcriptomics and serves as the foundation for other subsequent analyses. Current correction algorithms for RNA cell labeling rely on cell morphology derived from cell contour images, exhibiting weak robustness and low accuracy, with a substantial proportion of RNA molecules remaining unclassified. Significant opportunities exist for further exploration and optimization of this issue.

### SUMMARY

A main objective of the present disclosure is to provide a gene image data correction method and system, an electronic device, and a storage medium, to address the defects in the existing technology caused by the diffusion of RNA molecules, which leads to significant errors in gene image data and results in a large number of RNA molecules not being classified.

The present disclosure addresses the aforementioned technical problem through the following technical schemes.

In accordance with a first aspect of the present disclosure, there is provided a gene image data correction method, including:
determining a target region occupied by gene molecules belonging to a target cell in a gene image;
determining spatial coordinates and gene expression signal values of background gene molecules that are not assigned to any cell yet and are within a preset correction range of the target region;
inputting the spatial coordinates and the gene expression signal values into a probability distribution model to obtain probability scores, each indicating the probability that a respective background gene molecule belongs to the target cell, where the probability distribution model is derived through fitting based on spatial coordinates and gene expression signal values of gene molecule samples belonging to the target cell; and
determining, based on the probability scores, a cell to which the background gene molecules belong.

Preferably, determining, based on the probability scores, a cell to which the background gene molecules belong includes:
comparing the probability scores against a probability threshold respectively; and in response to the probability scores being greater than or equal to the probability threshold, correcting the respective background gene molecules as gene molecules belonging to the target cell.

Preferably, before determining spatial coordinates and gene expression signal values of background gene molecules that are not assigned to any cell yet and are within a preset correction range of the target region, the method further includes:
acquiring coordinate information of the gene molecules belonging to the target cell;
determining a centroid of the target region based on the coordinate information; and
determining the preset correction range of the target region with the centroid as a center.

Preferably, acquiring coordinate information of the gene molecules belonging to the target cell includes:
acquiring a microscope image and a gene image of a biological sample;
performing image registration on the microscope image and the gene image;
performing cell segmentation on the microscope image to obtain a cell segmentation result;
determining a gene image of a target cell based on the cell segmentation result and an image registration result of the gene image; and
determining coordinate information of the gene molecules belonging to the target cell based on the gene image of the target cell.

Preferably, determining a centroid of the target region based on the coordinate information includes:
counting the gene molecules belonging to the target cell to obtain a molecule count;
calculating a sum of horizontal coordinate values and a sum of vertical coordinate values of the gene molecules belonging to the target cell;
determining a first ratio, where the first ratio is a ratio of a horizontal coordinate value of the centroid of the target region to the molecule count; and
determining a second ratio, where the second ratio is a ratio of a vertical coordinate value of the centroid of the target region to the molecule count.

Preferably, before comparing the probability scores against a probability threshold respectively, the method further includes:
determining a third quartile of the range between a first probability score and a second probability score as the probability threshold,
where the first probability score is a maximum probability score among the probability scores; and the second probability score is a minimum probability score among the probability scores.

Preferably, the gene image data correction method further includes:
in response to determining, based on a comparison result, that the background gene molecule belongs to different target cells within a preset range, acquiring probability scores of the background gene molecule for respective target cells within the preset range; and
comparing the probability scores to correct the background gene molecule as a gene molecule belonging to a target cell with the maximum probability score.

Preferably, before determining the preset correction range of the target region with the centroid as a center, the method further includes:
constructing a two-dimensional point cloud map of the target region based on the centroid; and
determining the preset correction range based on the two-dimensional point cloud map.

Preferably, constructing a two-dimensional point cloud map of the target region based on the centroid includes:
constructing a digital image based on a microscope image within the target region, where grayscale values of pixels in the digital image are the same, all being a first grayscale value;
adjusting the first grayscale value of the centroid in the digital image to a second grayscale value, where the first grayscale value and the second grayscale value are different from each other; and
determining the adjusted digital image as a two-dimensional point cloud map of the target region.

Preferably, after determining, based on the probability scores, a cell to which the background gene molecules belong, the method further includes:
generating gene expression information of the target cell based on a corrected result of gene molecules belonging to the target cell.

In accordance with a second aspect of the present disclosure, there is provided a gene image data correction system, including:
a determination module configured to determine a target region occupied by gene molecules belonging to a target cell in a gene image, and further configured to determine spatial coordinates and gene expression signal values of background gene molecules that are not assigned to any cell yet and are within a preset correction range of the target region;
an acquisition module configured to input the spatial coordinates and the gene expression signal values into a probability distribution model to obtain probability scores, each indicating the probability that a respective background gene molecule belongs to the target cell, where the probability distribution model is derived through fitting based on spatial coordinates and gene expression signal values of gene molecule samples belonging to the target cell; and
a correction module configured to determine, based on the probability scores, a cell to which the background gene molecules belong.

In accordance with a third aspect of the present disclosure, there is provided an electronic device including a memory, a processor, and a computer program stored in the memory and executable by the processor, where the computer program, when executed by the processor, causes the processor to implement the gene image data correction method as described above.

In accordance with a fourth aspect of the present disclosure, there is provided a computer-readable medium storing computer instructions that, when executed by a processor, cause the processor to implement the gene image data correction method as described above.

The positive progress effect of the present disclosure lies in the following.

According to the present disclosure, with a general understanding of a target region of a target cell, by calculating, with respect to the target cell, probability scores of background gene molecules that are not assigned to any cell yet and within a preset correction range, and then determining a cell to which the background gene molecules belong based on the probability scores, the significant errors in gene image data caused by gene molecule diffusion can be reduced, thereby improving correction efficiency. Additionally, the robustness of the correction approach is enhanced because it does not rely on high-accuracy cell segmentation results.

### BRIEF DESCRIPTION OF DRAWINGS

FIG. 1 is a first flowchart of a gene image data correction method of Embodiment One of the present disclosure;
FIG. 2 is a second flowchart of the gene image data correction method of Embodiment One of the present disclosure;
FIG. 3 is a third flowchart of the gene image data correction method of Embodiment One of the present disclosure;
FIG. 4 is a fourth flowchart of the gene image data correction method of Embodiment One of the present disclosure;
FIG. 5 is a fifth flowchart of the gene image data correction method of Embodiment One of the present disclosure;
FIG. 6 is a schematic diagram of a two-dimensional point cloud map of target regions of target cells in the gene image data correction method of Embodiment One of the present disclosure;
FIG. 7 is a sixth flowchart of the gene image data correction method of Embodiment One of the present disclosure;
FIG. 8 is a visualization of morphological changes of cells after correction using the gene image data correction method of Embodiment One of the present disclosure;
FIG. 9a is a visualization of a first spatial clustering of a mouse brain before correction using the gene image data correction method of Embodiment One of the present disclosure;
FIG. 9b is a visualization of a second spatial clustering of a mouse brain before correction using the gene image data correction method of Embodiment One of the present disclosure;
FIG. 9c is a visualization of the first spatial clustering of a mouse brain after correction using the gene image data correction method of Embodiment One of the present disclosure;
FIG. 9d is a visualization of the second spatial clustering of a mouse brain after correction using the gene image data correction method of Embodiment One of the present disclosure;
FIG. 10 is a diagram showing changes in an average number of genes per cell of a mouse brain before and after correction using the gene image data correction method of Embodiment One of the present disclosure;
FIG. 11a is a visualization of target cells obtained with the UMAP algorithm (a dimensionality reduction algorithm) before correction using the gene image data correction method of Embodiment One of the present disclosure;
FIG. 11b is a visualization of target cells obtained with the Leiden algorithm (a clustering algorithm) before correction using the gene image data correction method of Embodiment One of the present disclosure;
FIG. 11c is a visualization of target cells obtained with the UMAP algorithm after correction using the gene image data correction method of Embodiment One of the present disclosure;
FIG. 11d is a visualization of target cells obtained with the Leiden algorithm after correction using the gene image data correction method of Embodiment One of the present disclosure;
FIG. 12 is a first block diagram of a gene image data correction system of Embodiment Two of the present disclosure;
FIG. 13 is a second block diagram of a gene image data correction system of Embodiment Two of the present disclosure; and
FIG. 14 is a schematic diagram of an electronic device of Embodiment Three of the present disclosure.

### DETAILED DESCRIPTION

The following further illustrates the present disclosure through embodiments, but does not limit the present disclosure to the scope of the described embodiments.

### Embodiment One

In the process of high-throughput sequencing analysis, by registering Stereo-seq spatial transcriptomics data with single-stranded DNA (ssDNA) images, and performing cell segmentation on the ssDNA images, correspondence between pixel coordinates and cells is established. The Stereo-seq spatial transcriptomics data is converted into gene expression data of the cells through this correspondence for downstream analysis.

However, since the cell size obtained through ssDNA image-based segmentation only reflects nuclear dimensions, resulting in discrepancies from actual cell size, along with issues including insufficient gene capture within cells in sequencing experiments, nuclear segmentation artifacts, and RNA diffusion effects, the genes assigned to cells are far fewer than those actually present in the cells. This leads to low data accuracy throughout the process, introduces errors in single-cell gene expression data, and consequently distorts downstream single-cell analysis. The problem of sequencing distortion occurs when acquiring spatial transcriptomics data.

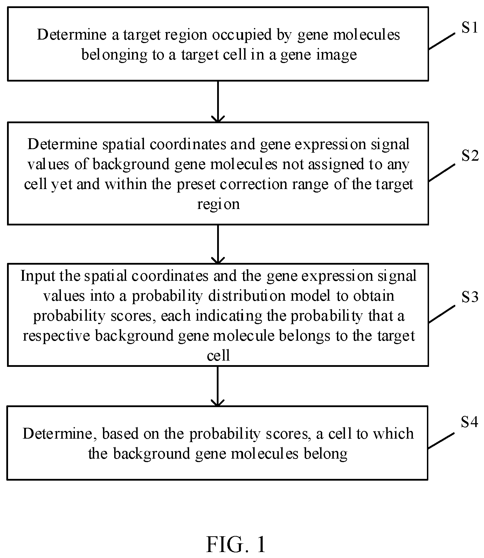

Currently, a spatial transcriptomics spatiotemporal data correction algorithm based on a Gaussian Mixture Model (GMM) is generally used for further correction of RNA cell labeling results. Specifically, the algorithm uses the GMM to calculate probability scores for gene molecules belonging to neighboring cells. GMM parameters are derived through fitting based on the RNA distribution within the current cell (primarily based on ssDNA spatial coordinates and unique molecular identifier (UMI) values). Using the GMM parameters derived through fitting, the probability scores of extracellular RNA molecules near the current cell boundary are calculated. However, the spatiotemporal data correction algorithm relies on the cell morphology derived from cell contour images, exhibiting weak robustness and low accuracy in final outcomes, with a substantial number of gene molecules remaining unclassified. In order to overcome the aforementioned defects currently present, this embodiment provides a gene image data correction method. As shown in FIG. 1, the gene image data correction method includes the following steps.

At S1, a target region occupied by gene molecules belonging to a target cell in a gene image is determined.

At S2, spatial coordinates and gene expression signal values of background gene molecules not assigned to any cell yet and within the preset correction range of the target region are determined.

Herein, the gene expression feature in this embodiment is DNA nano ball (DNB). By using the correspondence of each DNB in the Stereo-seq spatial transcriptomics data, the information of the cells to which the DNBs belong can be obtained, and the remaining DNBs not within the cells are treated as background DNBs. The spatial coordinates of background gene molecules can be represented by the coordinates of background DNBs.

At S3, the spatial coordinates and the gene expression signal values are input into a probability distribution model to obtain probability scores, each indicating the probability that a respective background gene molecule belongs to the target cell.

For fitting of the GMM, there are three independent variables: spatial coordinates (x, y) and a signal value. The dependent variable, i.e., output, is a probability score indicating the probability that each gene molecule belongs to the target cell. The specific implementation process is as follows: the Gaussian Mixture from Scikit-learn (a machine learning library) is applied, and the parameters of the GMM are automatically fitted using the input data to obtain the final probability model.

Herein, the probability distribution model is derived by fitting to spatial coordinates and gene expression signal values of gene molecule within a target cell. As a preferred implementation, in this embodiment, the probability distribution model can be a GMM.

At S4, a cell to which the background gene molecules belong is determined based on the probability scores.

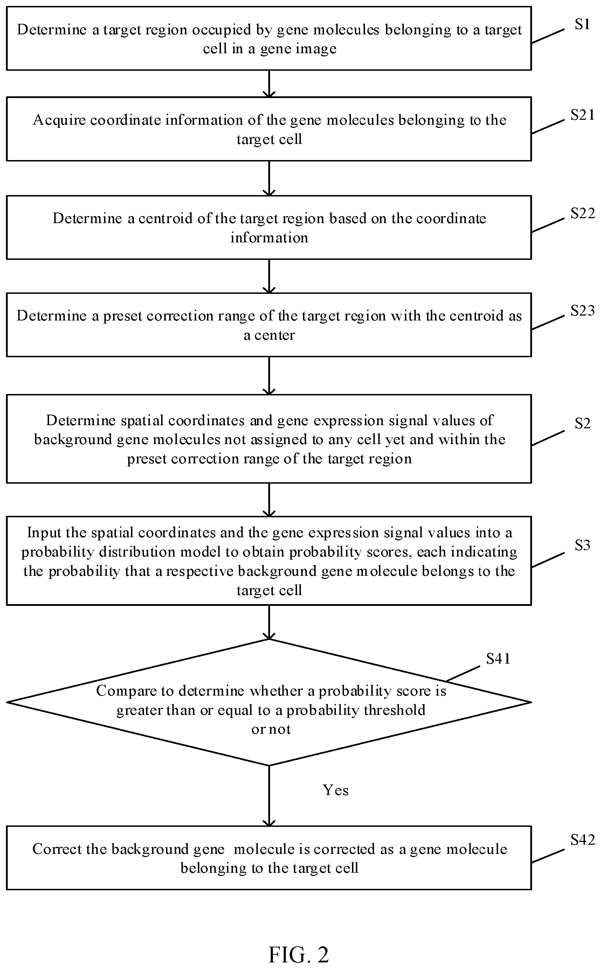

In an alternative implementation, with reference to FIG. 2, step S4 includes the following sub-steps.

At S41, it is determined by comparison whether a probability score is greater than or equal to a probability threshold or not.

In response to the probability score being greater than or equal to the probability threshold, the process proceeds to step S42. In response to the probability score being less than the probability threshold, the background gene molecule remains as a background molecule unassigned to any cell.

In an alternative implementation, a third quartile of the range between a first probability score and a second probability score is determined as the probability threshold.

Herein, the first probability score is a maximum probability score among the probability scores; and the second probability score is a minimum probability score among the probability scores.

At S42, the background gene molecule is corrected as a gene molecule belonging to the target cell.

In this embodiment, with a general understanding of a target region of a target cell, by calculating, with respect to the target cell, probability scores of background gene molecules that are within a preset correction range, and then determining a cell to which the background gene molecules belong based on the probability scores, significant errors in gene image data caused by gene molecule diffusion can be reduced, thereby improving correction efficiency. Additionally, the robustness of the correction approach is enhanced because it does not rely on high-accuracy cell segmentation results.

In an alternative implementation, with reference to FIG. 2, before step S2, the method includes the following steps.

At S21, coordinate information of the gene molecules belonging to the target cell is acquired.

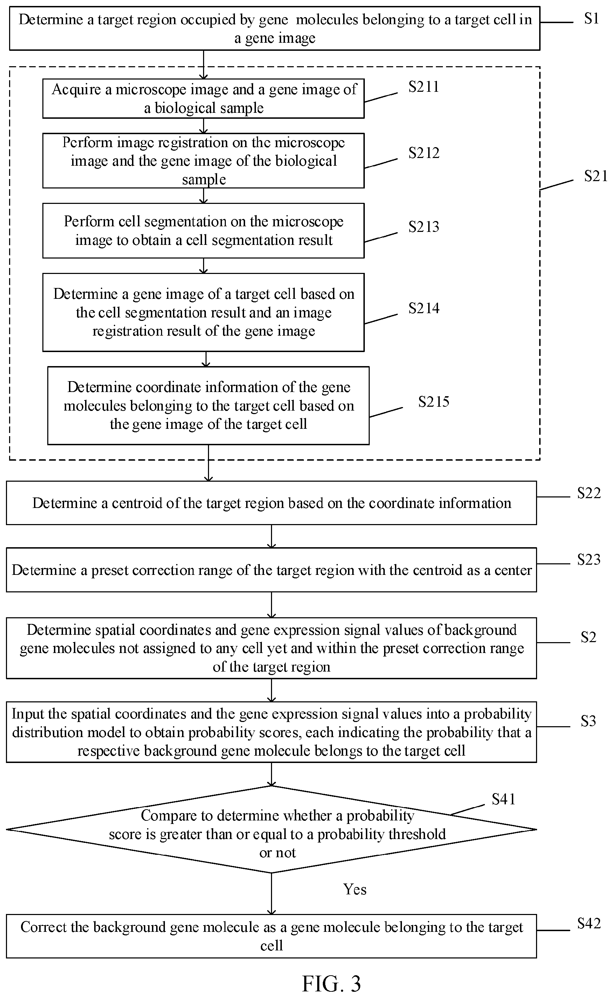

In an alternative implementation, with reference to FIG. 3, step S21 includes the following sub-steps.

At S211, a microscope image and a gene image of a biological sample are acquired.

Herein, the microscope image and the gene image include a plurality of target cells.

The microscope image may be an image obtained by photographing the biological sample through a microscope and it includes spatial information of the biological sample. The gene image includes spatial information and genetic data of the biological sample. Herein, the pixels in the gene image correspond to the elements of the gene matrix, and the pixel values correspond to the values of these elements. Therefore, the gene image can include the spatial information of the same biological sample.

In this embodiment, the microscope image may be represented as ssDNA image, without the intention to limit the type of the microscope image, and adjustments and selections can be made according to actual needs. The gene image may be represented as Stereo-seq spatial transcriptomics data, spatial transcriptomics data, or gene expression data, etc.

At S212, image registration is performed on the microscope image and the gene image.

For example, image registration is performed on the ssDNA image (i.e., microscope image) and the Stereo-seq spatial transcriptomics data (i.e., gene image) to generate gene expression information of the cell.

In the process of image registration, the microscope image is rotated and/or scaled based on its markings. A preliminary offset, calculated from the centroids of the microscope image and the gene image, is then applied to preliminary registration of the microscope image with gene image. The microscope image is corrected for offset based on the respective markings of the microscope image and the gene image. Subsequently, image registration is performed between the gene image and the corrected microscope image.

At S213, cell segmentation is performed on the microscope image to obtain a cell segmentation result.

That is, cell segmentation is performed on the microscope image to acquire the correspondence between spatial positions and cells, and based on this correspondence, a cell segmentation result is generated.

At S214, a gene image of a target cell is determined based on the cell segmentation result and an image registration result of the gene image.

Based on the gene image of the target cell, gene molecules can be classified as gene molecules belonging to the target cell and background gene molecules of unknown associated cells.

At S215, coordinate information of the gene molecules belonging to the target cell is determined based on the gene image of the target cell.

In this implementation, by determining the gene image of target cells to identify the coordinate information of gene molecules belonging to the target cells, the accuracy of determining the coordinate information of gene molecules is improved.

At S22, a centroid of the target region is determined based on the coordinate information.

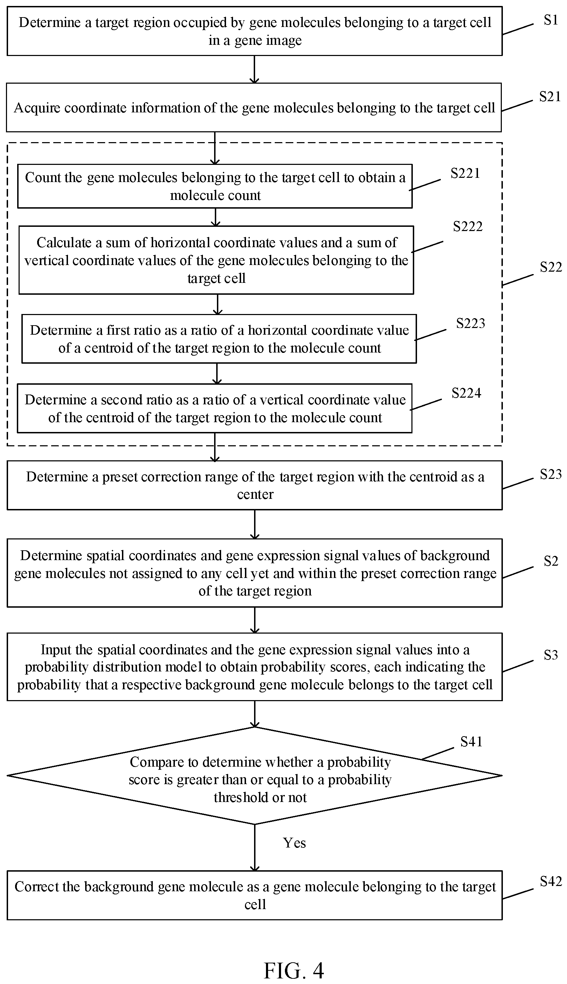

In an alternative implementation, with reference to FIG. 4, step S22 includes the following sub-steps.

At S221, the gene molecules belonging to the target cell are counted to obtain a molecule count.

At S222, a sum of horizontal coordinate values and a sum of vertical coordinate values of the gene molecules belonging to the target cell are calculated.

At S223, a first ratio is determined.

Herein, the first ratio is a ratio of a horizontal coordinate value of a centroid of the target region to the molecule count.

At S224, a second ratio is determined.

Herein, the second ratio is a ratio of a vertical coordinate value of the centroid of the target region to the molecule count.

In this implementation, through the above calculations, the centroids of the target regions of the target cells are scientifically determined, thereby improving the accuracy of correction.

At S23, a preset correction range of the target region is determined with the centroid as a center.

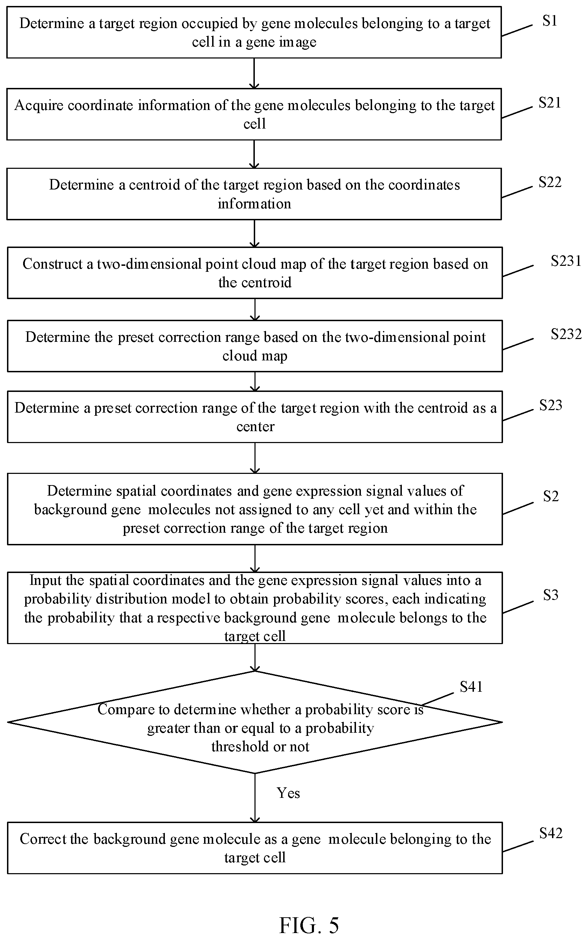

In an alternative implementation, with reference to FIG. 5, before step S23, the method includes the following steps.

At S231, a two-dimensional point cloud map of the target region is constructed based on the centroid.

In an alternative implementation, step S231 includes the following sub-steps.

At S2311, a digital image is constructed based on a microscope image within the target region.

Herein, grayscale values of pixels in the digital image are the same, all being a first grayscale value.

At S2312, the first grayscale value of the centroid in the digital image is adjusted to a second grayscale value.

Herein, the first grayscale value and the second grayscale value are different from each other so as to distinguish the centroids of the cells from other pixels in the digital image.

At S2313, the adjusted digital image is determined as a two-dimensional point cloud map of the target region. A two-dimensional point cloud map is an image where the background is black (with a grayscale value of 0) and the foreground consists of discrete pixels (with grayscale values that are greater than 0 and less than or equal to 255), each of which represents centroid coordinates of a cell (the centroid coordinates of the cell is determined based on the values of horizontal and vertical coordinates of the gene molecules within the cell).

The following introduces an example of how to construct a two-dimensional point cloud map.

First, an all-black digital image (i.e., the grayscale values of pixels in the image are all 0, with the first grayscale value being 0) of the same size as the original microscope image is generated.

Next, the centroids of all the cells are calculated according to step S22.

Finally, in the previously generated all-black digital image, the calculated centroid of all the cells are sequentially assigned with non-zero intensity values (i.e., setting their grayscale values to any number within the range of (0, 255), where this number is the second grayscale value), and the final image obtained is the two-dimensional point cloud map of this embodiment.

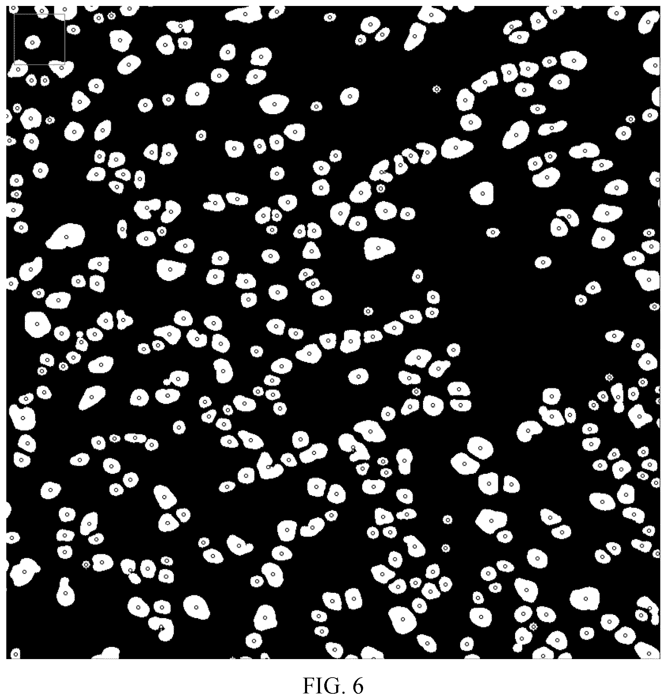

FIG. 6 is a schematic diagram of a two-dimensional point cloud map of target regions of target cells.

At S232, the preset correction range is determined based on the two-dimensional point cloud map.

In this implementation, it is only necessary to acquire the approximate coordinates of the target region to perform the correction step, thereby further enhancing the robustness of this embodiment and avoiding the dependency on high-accuracy cell segmentation results.

In this implementation, each target cell is abstracted as a coordinate point, and using this point as the center, the spatial coordinates and gene expression signal values of background gene molecules within the preset correction range are acquired. This approach reduces the likelihood of significant errors in gene image data caused by the diffusion of gene molecules, without relying on high-accuracy cell segmentation results, further enhances the efficiency of the correction process and more scientifically determines the preset correction range, thereby further improving the accuracy of the correction.

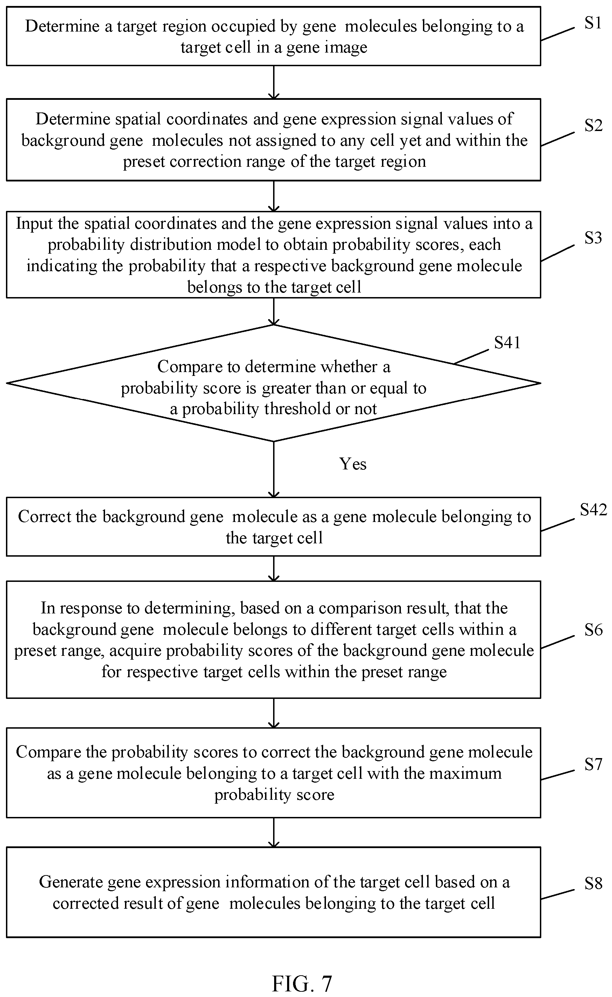

In an alternative implementation, with reference to FIG. 7, the gene image data correction method further includes the following steps.

At S6, in response to determining, based on a comparison result, that the background gene molecule belongs to different target cells within a preset range, probability scores of the background gene molecule are acquired for respective target cells within the preset range.

At S7, the probability scores are compared to correct the background gene molecule as a gene molecule belonging to a target cell with the maximum probability score.

In practice, when applying the gene image data correction method of this embodiment, a background molecule may be associated with a plurality of neighboring cells simultaneously. In this implementation, the probability scores representing the likelihood that the background gene molecule belongs to each of the plurality of neighboring cells are then calculated respectively. The background gene molecule is corrected as a gene molecule belonging to the target cell with the maximum probability score. This further improves the accuracy of the correction result.

In an alternative implementation, with reference to FIG. 7, after step S5, the method includes the following step.

At S8, gene expression information of the target cell is generated based on a corrected result of gene molecules belonging to the target cell.

The following sets of experimental visualizations illustrate the beneficial effects of the gene image data correction method of this embodiment.

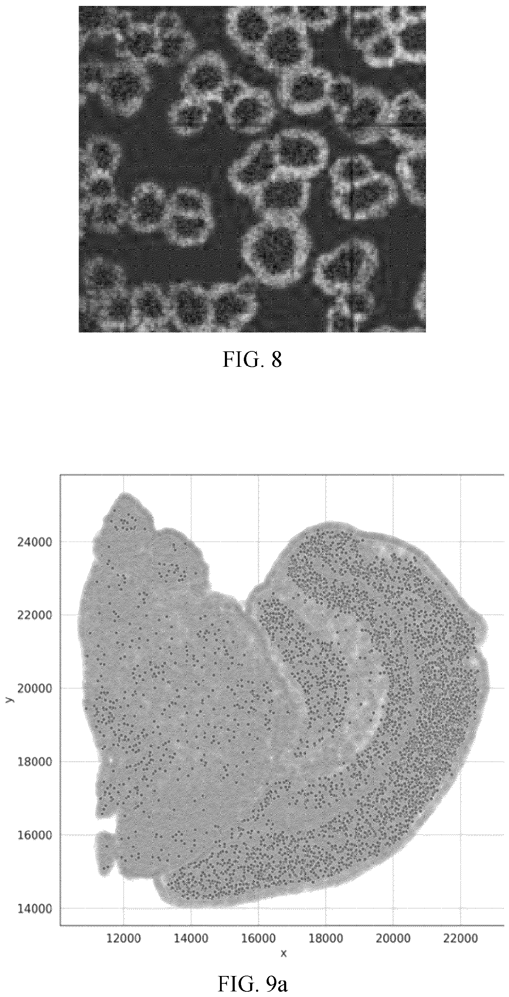

FIG. 8 is a visualization of morphological changes of cells after correction using the gene image data correction method of this embodiment, with black indicating the gene molecules newly assigned to the cells.

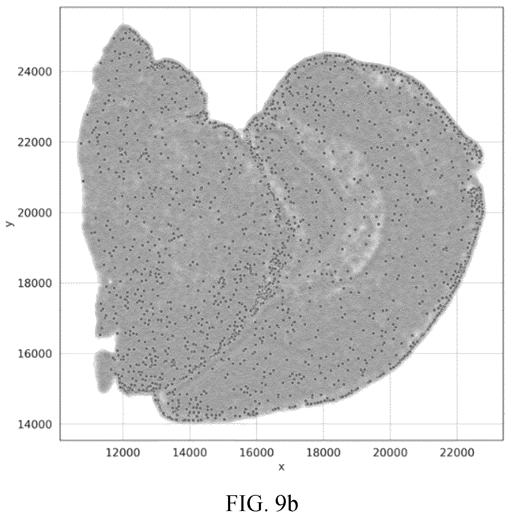

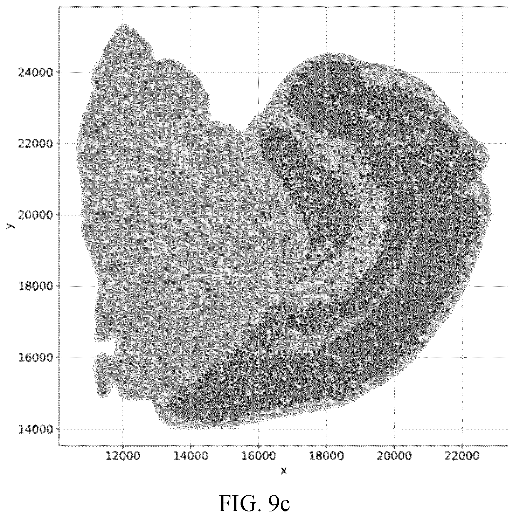

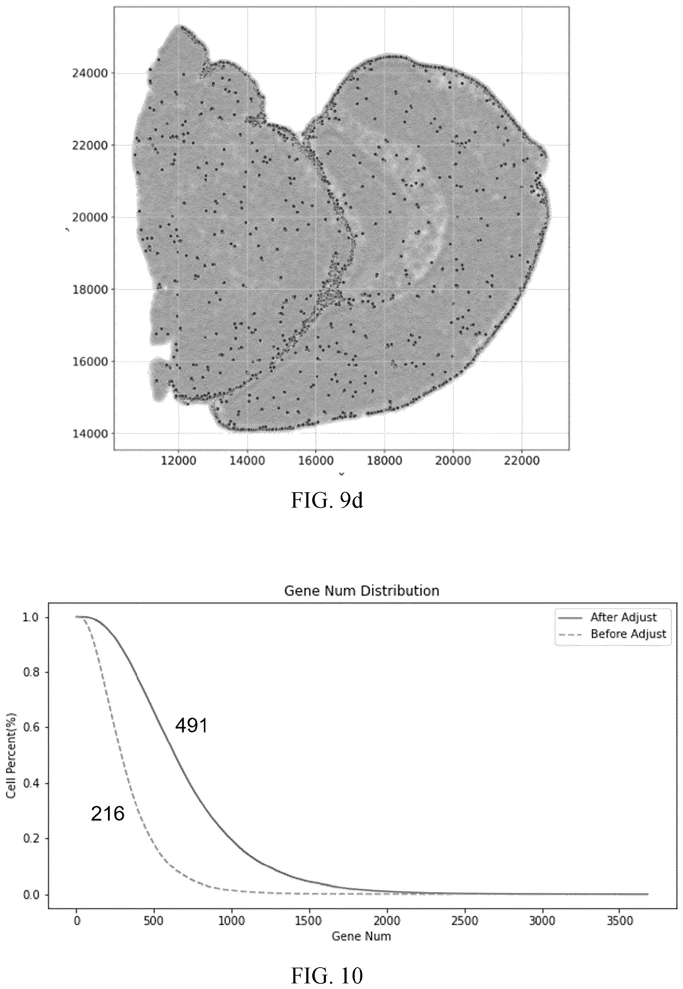

FIGS. 9a and 9b show visualizations of spatial clustering of a mouse brain before correction. FIGS. 9c and 9d show visualizations of the clustering of the mouse brain after correction. By comparison, it can be seen that the spatial positions of the corrected mouse brain cell clusters are clearer, with fewer intra-class noise points. The units of the x-axis (horizontal coordinate) and y-axis (vertical coordinate) of FIGS. 9a, 9b, 9c, and 9d are all in pixels.

FIG. 10 shows the changes in an average number of genes per cell of a mouse brain before and after correction, with a solid line representing the average number of genes per cell after correction and a dashed line representing the average number of genes per cell before correction. The horizontal axis represents the number of gene molecules per cell (Gene num per cell), and the vertical axis represents the ratio of the average gene number in a cell. It can be clearly seen from FIG. 10 that the average gene number within the mouse brain cells has significantly increased after correction.

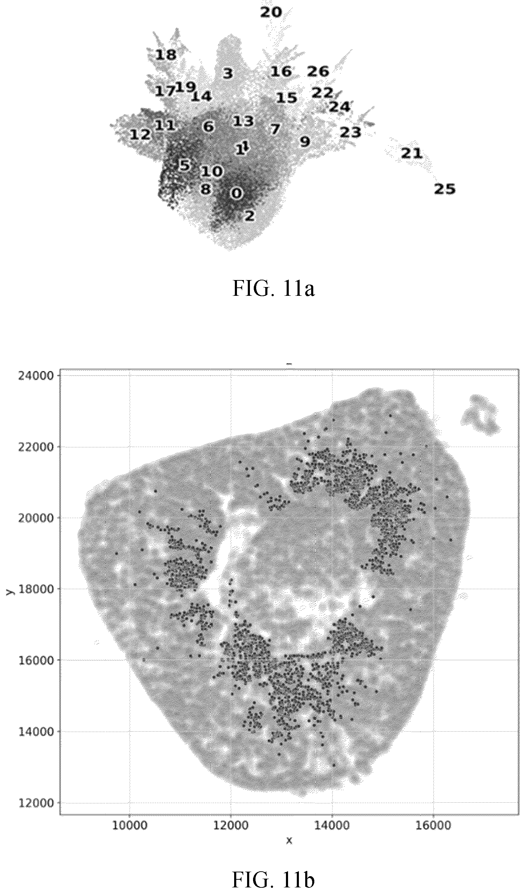

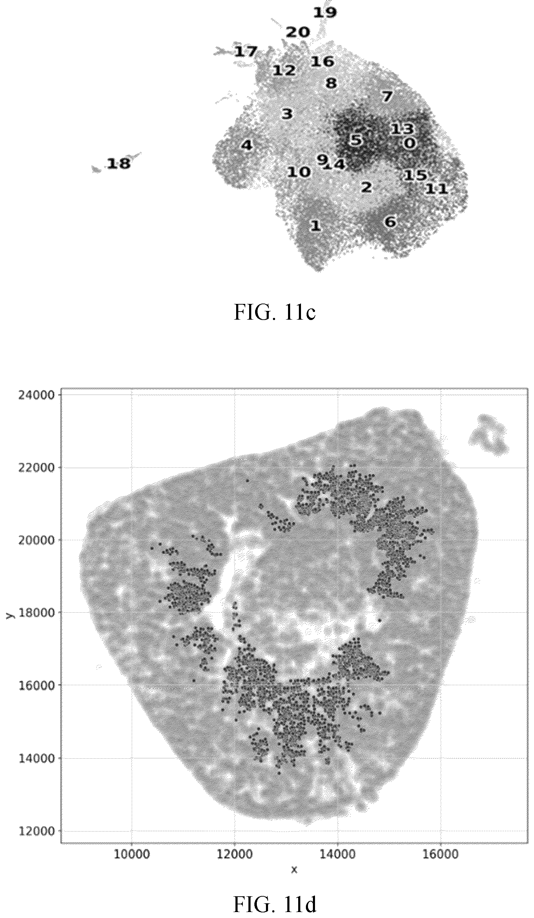

FIG. 11a shows a visualization using the UMAP algorithm (a dimensionality reduction algorithm) before correction, and FIG. 11b shows a visualization using the Leiden algorithm (a clustering algorithm) before correction, while FIG. 11c shows a visualization using the UMAP algorithm (a dimensionality reduction algorithm) after correction, and FIG. 11d shows a visualization using the Leiden algorithm (a clustering algorithm) after correction.

FIG. 11a and FIG. 11c are the dimensionality reduction visualization results of the original data, where different numbers represent different clusters after dimensionality reduction. The more dispersed the points of different clusters are, the more concentrated the points of the same cluster are, the better the clustering effect. This proves the effectiveness of the correction algorithm. Compared to FIG. 11a, it can be seen from FIG. 11c that the clustering effect is better after correction.

FIG. 11b and FIG. 11d are the visualizations after clustering using the Leiden algorithm. In the corrected data, if the gene distribution of the same cluster shows more pronounced spatial distribution features, it is considered that the correction algorithm is more effective. Compared to FIG. 11b, it can be seen from FIG. 11d that the clustering results after correction exhibit more pronounced spatial distribution features (the black dots marked on the tissue in the figures).

### Embodiment Two

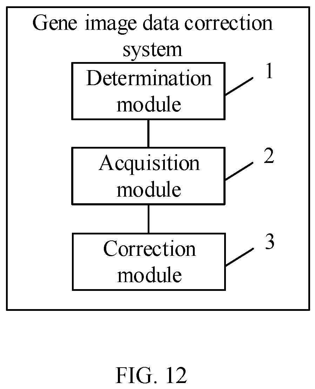

This embodiment provides a gene image data correction system, as shown in FIG. 12, including:
a determination module 1 configured to determine a target region occupied by gene molecules belonging to a target cell in a gene image, and determine spatial coordinates and gene expression signal values of background gene molecules that are not assigned to any cell yet and are within a preset correction range of the target region;
an acquisition module 2 configured to input the spatial coordinates and the gene expression signal values into a probability distribution model to obtain probability scores, each indicating the probability that a respective background gene molecule belongs to the target cell, where the probability distribution model is derived through fitting based on spatial coordinates and gene expression signal values of gene molecule samples belonging to the target cell; and
a correction module 3 configured to determine, based on the probability scores, a cell to which the background gene molecules belong.

In an alternative implementation, the correction module 3 is further configured to compare the probability scores against a probability threshold respectively; and in response to the probability scores being greater than or equal to the probability threshold, correct the respective background gene molecules as gene molecules belonging to the target cell.

In an alternative implementation, the acquisition module 2 is further configured to acquire coordinate information of the gene molecules belonging to the target cell.

The determination module 1 is further configured to determine a centroid of the target region based on the coordinate information; and determine a preset correction range of the target region with the centroid as a center.

In an alternative implementation, the acquisition module 2 is further configured to acquire a microscope image and a gene image of a biological sample.

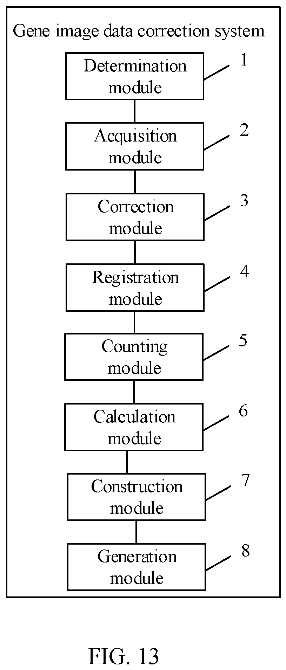

As shown in FIG. 13, the gene image data correction system further includes:
a registration module 4 configured to perform image registration on the microscope image and the gene image.

The acquisition module 2 is further configured to perform cell segmentation on the microscope image to obtain a cell segmentation result.

The determination module 1 is further configured to determine a gene image of a target cell based on the cell segmentation result and an image registration result of the gene image, and determine coordinate information of the gene molecules belonging to the target cell based on the gene image of the target cell.

In an alternative implementation, as shown in FIG. 13, the gene image data correction system further includes:
a counting module 5 configured to count the gene molecules belonging to the target cell to obtain a molecule count; and
a calculation module 6 configured to calculate a sum of horizontal coordinate values and a sum of vertical coordinate values of the gene molecules belonging to the target cell.

The determination module 1 is further configured to determine a first ratio, where the first ratio is a ratio of horizontal coordinate value of the centroid of the target region to the molecule count; and determine a second ratio, where the second ratio is a ratio of a vertical coordinate value of the centroid of the target region to the molecule count.

In an alternative implementation, the determination module 1 is further configured to determine a third quartile of the range between a first probability score and a second probability score as the probability threshold, where the first probability score is a maximum probability score among the probability scores; and the second probability score is a minimum probability score among the probability scores.

In an alternative implementation, the acquisition module 2 is further configured to, in response to determining, based on a comparison result, that the background gene molecule belongs to different target cells within a preset range, acquire probability scores of the background gene molecule for respective target cells within the preset range.

The correction module 3 is further configured to compare the probability scores to correct the background gene molecule as a gene molecule belonging to a target cell with the maximum probability score.

In an alternative implementation, as shown in FIG. 13, the gene image data correction system further includes:
a construction module 7 configured to construct a two-dimensional point cloud map of the target region based on the centroid.

The determination module 1 is further configured to determine the preset correction range based on the two-dimensional point cloud map.

In an alternative implementation, the construction module 7 is further configured to construct a digital image based on a microscope image within the target region, where grayscale values of pixels in the digital image are the same, all being a first grayscale value.

The correction module 3 is further configured to adjust the first grayscale value of the centroid in the digital image to a second grayscale value, where the first grayscale value and the second grayscale value are different from each other.

The determination module 1 is further configured to determine the adjusted digital image as a two-dimensional point cloud map of the target region.

In an alternative implementation, as shown in FIG. 13, the gene image data correction system further includes:
a generation module 8 configured to generate gene expression information of the target cell based on a corrected result of gene molecules belonging to the target cell.

It should be noted that the implementation principles and technical effects of the various modules in this embodiment can be found in the corresponding sections of Embodiment One, and therefore, details are not repeated herein.

### Embodiment Three

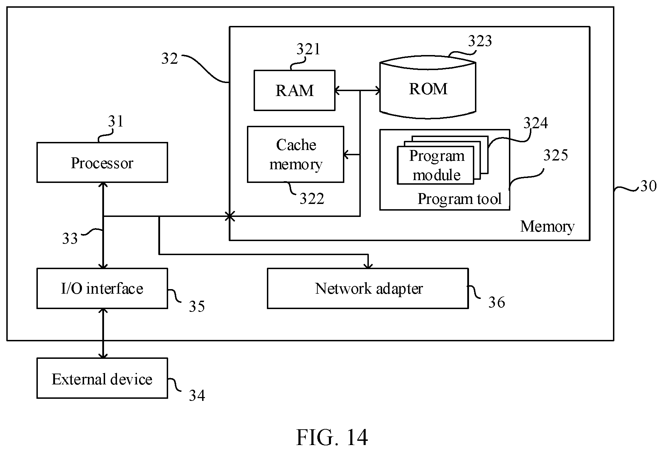

This embodiment provides an electronic device. FIG. 14 is a schematic diagram of modules of the electronic device. The electronic device includes a memory, a processor, and a computer program stored in the memory and executable by the processor, where the computer program, when executed by the processor, causes the processor to implement the gene image data correction method of Embodiment One. The electronic device 30 shown in FIG. 14 is just an example and should not limit the scope of functions and application of the embodiments of the present disclosure.

As shown in FIG. 14, the electronic device 30 may be embodied in the form of a general-purpose computing device, for example, it can be a server device. Components of the electronic device 30 may include but are not limited to: at least one above-mentioned processor 31, at least one above-mentioned memory 32, and a bus 33 connecting different components (including the memory 32 and the processor 31).

The bus 33 includes a data bus, an address bus, and a control bus.

The memory 32 may include a volatile memory, such as a random access memory (RAM) 321 and/or a cache memory 322, and may further include a read-only memory (ROM) 323.

The memory 32 may also include a program/utility tool 325 with a set of (at least one) program module(s) 324, such a program module 324 include but is not limited to: an operation system, one or more application programs, other program modules and program data, and each or some combinations of these examples may include the implementation of a network environment.

The processor 31 executes various functional applications and data processing by running the computer program stored in the memory 32, such as the gene image data correction method of Embodiment One of the present disclosure.

The electronic device 30 may also communicate with one or more external devices 34 (such as a keyboard, a pointing device, etc.). Such communication can be done through an input/output (I/O) interface 35. Additionally, the model-generated device 30 may also communicate with one or more networks (such as local area networks (LAN), wide area networks (WAN), and/or public networks, such as the Internet) via a network adapter 36. As shown in FIG. 14, the network adapter 36 communicates with other modules of the model-generated device 30 via a bus 33. It should be understood that although not shown in the figure, other hardware and/or software modules may be used in conjunction with the model-generated device 30, including but not limited to: microcode, device drivers, redundant processors, external disk drive arrays, Redundant Array of Independent Disks (RAID) systems, tape drives, and data backup storage systems.

It should be noted that although several units/modules or sub-units/modules of the electronic device have been mentioned in the detailed description above, this division is merely exemplary and not mandatory. In practice, according to the implementation of the present disclosure, the features and functions of two or more units/modules described above may be embodied in a single unit/module. Conversely, the features and functions of a single unit/module described above can be further divided into multiple units/modules.

### Embodiment Four

This embodiment provides a computer-readable storage medium storing a computer program that, when executed by a processor, causes the processor to implement the gene image data correction method of Embodiment One.

Herein, the computer-readable storage medium may include but is not limited to: a portable disk, a hard disk, a random access memory, a read-only memory, an erasable programmable read-only memory, an optical storage devices, a magnetic storage device, or any suitable combinations thereof.

**In** a possible implementation, the present disclosure may also be realized in the form of a program product, which includes program code that, when executed on a terminal device, causes the terminal device to execute the gene image data correction method of Embodiment One.

Herein, the program code for executing the present disclosure can be written in any combination of one or more programming languages, and the program code can be executed entirely on a user device, partially on a user device, as a standalone software package, partially on a user device and partially on a remote device, or entirely on a remote device.

Although the specific embodiments of the present disclosure have been described above, those of ordinary skill in the art should understand that these are merely illustrative examples, and various changes or modifications may be made without departing from the principles and essence of the present disclosure. Therefore, the scope of protection of the present disclosure is defined by the appended claims.

## Claims

1. A gene image data correction method, comprising:
determining a target region occupied by gene molecules belonging to a target cell in a gene image;
determining spatial coordinates and gene expression signal values of background gene molecules that are not assigned to any cell yet and are within a preset correction range of the target region;
inputting the spatial coordinates and the gene expression signal values into a probability distribution model to obtain probability scores, each indicating the probability that a respective background gene molecule belongs to the target cell, wherein the probability distribution model is derived through fitting based on spatial coordinates and gene expression signal values of gene molecule samples belonging to the target cell; and
determining, based on the probability scores, a cell to which the background gene molecules belong.

2. The gene image data correction method of claim 1, wherein determining, based on the probability scores, a cell to which the background gene molecules belong comprises:
comparing the probability scores against a probability threshold respectively; and
in response to the probability scores being greater than or equal to the probability threshold, correcting the respective background gene molecules as gene molecules belonging to the target cell.

3. The gene image data correction method of claim 2, wherein before determining spatial coordinates and gene expression signal values of background gene molecules that are not assigned to any cell yet and are within a preset correction range of the target region, the method further comprises:
acquiring coordinate information of the gene molecules belonging to the target cell;
determining a centroid of the target region based on the coordinate information; and
determining the preset correction range of the target region with the centroid as a center.

4. The gene image data correction method of claim 3, wherein acquiring coordinate information of the gene molecules belonging to the target cell comprises:
acquiring a microscope image and a gene image of a biological sample;
performing image registration on the microscope image and the gene image;
performing cell segmentation on the microscope image to obtain a cell segmentation result;
determining a gene image of a target cell based on the cell segmentation result and an image registration result of the gene image; and
determining coordinate information of the gene molecules belonging to the target cell based on the gene image of the target cell.

5. The gene image data correction method of claim 3, wherein determining a centroid of the target region based on the coordinate information comprises:
counting the gene molecules belonging to the target cell to obtain a molecule count;
calculating a sum of horizontal coordinate values and a sum of vertical coordinate values of the gene molecules belonging to the target cell;
determining a first ratio, wherein the first ratio is a ratio of a horizontal coordinate value of the centroid of the target region to the molecule count; and
determining a second ratio, wherein the second ratio is a ratio of a vertical coordinate value of the centroid of the target region to the molecule count.

6. The gene image data correction method of claim 2, wherein before comparing the probability scores against a probability threshold respectively, the method further comprises:
determining a third quartile of the range between a first probability score and a second probability score as the probability threshold,
wherein the first probability score is a maximum probability score among the probability scores; and the second probability score is a minimum probability score among the probability scores.

7. The gene image data correction method of claim 1, further comprising:
in response to determining, based on a comparison result, that a background gene molecule of the background gene molecules belongs to different target cells within a preset range, acquiring probability scores of the background gene molecule for respective target cells within the preset range; and
comparing the probability scores to correct the background gene molecule as a gene molecule belonging to a target cell with the maximum probability score.

8. The gene image data correction method of claim 3, wherein before determining the preset correction range of the target region with the centroid as a center, the method further comprises:
constructing a two-dimensional point cloud map of the target region based on the centroid; and
determining the preset correction range based on the two-dimensional point cloud map.

9. The gene image data correction method of claim 8, wherein constructing a two-dimensional point cloud map of the target region based on the centroid comprises:
constructing a digital image based on a microscope image within the target region, wherein grayscale values of pixels in the digital image are the same, all being a first grayscale value;
adjusting the first grayscale value of the centroid in the digital image to a second grayscale value, wherein the first grayscale value and the second grayscale value are different from each other; and
determining the adjusted digital image as a two-dimensional point cloud map of the target region.

10. The gene image data correction method of claim 1, wherein after determining, based on the probability scores, a cell to which the background gene molecules belong, the method further comprises:
generating gene expression information of the target cell based on a corrected result of gene molecules belonging to the target cell.

11. A gene image data correction system, comprising:
a determination module configured to determine a target region occupied by gene molecules belonging to a target cell in a gene image, and further configured to determine spatial coordinates and gene expression signal values of background gene molecules that are not assigned to any cell yet and are within a preset correction range of the target region;
an acquisition module configured to input the spatial coordinates and the gene expression signal values into a probability distribution model to obtain probability scores, each indicating the probability that a respective background gene molecule belongs to the target cell, wherein the probability distribution model is derived through fitting based on spatial coordinates and gene expression signal values of gene molecule samples belonging to the target cell; and
a correction module configured to determine, based on the probability scores, a cell to which the background gene molecules belong.

12. An electronic device, comprising a memory, a processor, and a computer program stored in the memory and executable by the processor, wherein the computer program, when executed by the processor, causes the processor to perform the gene image data correction method of any one of claims 1 to 10.

13. A computer-readable medium storing computer instructions that, when executed by a processor, cause the processor to perform the gene image data correction method of any one of claims 1 to 10.
